Europäisches Patentamt
European Patent Office
Office européen des brevets

(11) Publication number: 0 273 667
A2

# EUROPEAN PATENT APPLICATION

(21) Application number: 87311247.8

(22) Date of filing: 21.12.87

(51) Int. Cl.4: A01N 43/36, A01N 37/26, A01N 25/32, //(A01N43/36, 37:26,25:32)

(30) Priority: 22.12.86 US 946738

(43) Date of publication of application: 06.07.88 Bulletin 88/27

(84) Designated Contracting States: AT BE CH DE ES FR GB GR IT LI LU NL SE

(71) Applicant: STAUFFER AGRICULTURAL CHEMICALS COMPANY, INC.
c/0 ICI Americas Inc. Concord Pike & New Murphy Road
Wilmington Delaware 19897(US)

(72) Inventor: Groenwold, Bareld Egge
848 Penns Way West Chester
Pennsylvania 19380(US)
Inventor: Green, Laddie Lee
4345 Sherbourne Drive San Jose
California 95124(US)

(74) Representative: Froud, Clive et al
Elkington and Fife High Holborn House 52/54
High Holborn
London WC1V 6SH(GB)

## (54) Herbicide-antidote composition.

(57) An herbicide-antidote composition comprising: (a) an herbicidally effective amount of a pyrrolidone compound; (b) an herbicidally effective amount of an alpha-haloacetanilide; and (c) a non-phytotoxic antidotally effective amount of a dichloroacetyl oxazolidone is disclosed.

EP 0 273 667 A2

## HERBICIDE-ANTIDOTE COMPOSITION

This invention relates to a herbicide-antidote composition containing a mixture of two specific types of herbicides and an antidote therefor, which is useful in the control of weed pests in corn, yet which does not harm the corn crop plant.

An herbicide is a compound which controls or modifies plant growth, e.g., killing, retarding, defoliating, desiccating, regulating, stunting, tillering, and dwarfing. The term "plant" refers to all physical parts of a plant, including seeds, seedlings, saplings, roots, tubers, stems, stalks, foliage, and fruits. "Plant growth" includes all phases of development from seed germination to natural or induced cessation of life.

Herbicides are generally used to control or eradicate weed pests. They have gained a high degree of commercial success because it has been shown that such control can increase crop yield and reduce harvesting costs.

The most popular methods of herbicide application include: pre-plant incorporation into the soil; in-furrow application to seeds and surrounding soil; pre-emergence surface treatment of seeded soil; and post-emergence treatment of the plant and soil.

A manufacturer of an herbicide generally recommends a range of application rates and concentrations calculated to maximize weed control. The range of rates varies from approximately 0.01 to 50 pounds per acre (0.0112 to 56 kilograms per hectare (k/ha)), and is usually in the range of from 0.1 to 25 pounds per acre (0.112 to 28 k/ha). The term "herbicidally effective amount" describes the amount of an herbicide compound which controls or modifies plant growth. The actual amount used depends upon several considerations, including particular weed susceptibility and overall cost limitations.

One of the most important factors influencing the usefulness of a given herbicide is its selectivity towards crops. In some cases, a beneficial crop is susceptible to the effects of the herbicide. In addition, certain herbicidal compounds are phytotoxic to some weed species but not to others. To be effective, an herbicide must cause minimal damage (preferably no damage) to the beneficial crop while maximizing damage to weed species which plague that crop.

To preserve the beneficial aspects of herbicide use, i.e., to maximize weed control, and to minimize crop damage, many herbicide "antidotes" have been prepared. These antidotes reduce or eliminate damage to the crop while maintaining or increasing the damaging effect of the herbicide on weed species; See, for example, U.S. Pats. 3,959,304; 4,021,224 and 4,021,229 and Belgian Pat. 846,894.

The precise mechanism by which an antidote reduces herbicidal crop injury has not been established. An antidote compound may be a remedy, interferent, protectant, or antagonist. As used herein, "antidote" describes a compound which has the effect of establishing herbicide selectivity, i.e., continued herbicidal phytotoxicity to weed species and reduced or non-phytotoxicity to cultivated crop species. The term "antidotally effective amount" describes the amount of an antidote compound which counteracts a phytotoxic response of a beneficial crop to an herbicide.

Herbicide compositions comprising a pyrrolidone herbicide and a dichloroacetyl oxazolidine antidote therefor have been described in the literature. See, for example U.S. Patent 4,441,914, Dirksen et al., issued April 10, 1984. When the pyrrolidone compound described in that patent is used without benefit of an antidote and is formulated as an emulsifiable concentrate and applied, bleaching of the crop occurs in the early stages of growth. Bleaching is due to loss of pigmentation in a plant and is seen as a yellowing of the plants leaves. The inclusion of the dichloroacetyloxazolidine antidote in the composition substantially lessens the bleaching effect of the pyrrolidone, particularly as it concerns the corn crop plant. Even so, however, some damage still occurs to the crop plant.

The present invention is concerned with the discovery that the inclusion of an additional herbicide compound into the binary combination of the pyrrolidone and the dichloroacetyloxazolidine antidote as described in U.S. Pat. 4,441,914, results in a composition in which virtually all bleaching disappears as relates to corn. The additional herbicide compound incorporated into the compositions in accordance with of this invention is an alpha-haloacetanilide, described and claimed in U.S. Pats. 3,442,945, and 3,547,620.

It has now been discovered that a three-part herbicidal composition, comprising a mixture of two herbicides and an antidote therefor is an effective antidote for the protection of small grain crops from herbicide injury due primarily to pyrrolidone.

This invention thus embodies a three-part herbicidal system comprised of:

(a) an herbicidally effective amount of a pyrrolidone compound of the formula

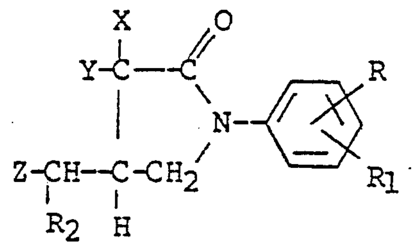

in which
X is hydrogen, chlorine, or methyl;
Y is hydrogen, chlorine or bromine;
Z is chlorine or bromine;
R is hydrogen, alkyl, acetyl, chlorine, bromine, fluorine, iodine, trifluoromethyl, nitro, cyano, alkoxy having 1 to 4 carbon atoms, inclusive, alkylthio having 1 to 4 carbon atoms, inclusive, alkylsulfinyl having 1 to 4 carbon atoms, inclusive, alkylsulfonyl having 1 to 4 carbon atoms, inclusive, trifluoromethylthio, trifluoromethylsulfinyl, trifluoromethylsulfonyl, pentafluoropropionamido, or 3-methylureido;
$R_1$ is hydrogen, alkyl having 1 to 4 carbon atoms, inclusive, chlorine or trifluoromethyl; and
$R_2$ is alkyl having 1 to 4 carbon atoms, inclusive, or hydrogen;

(b) an herbicidally effective amount of an alpha-haloacetanilide of the formula

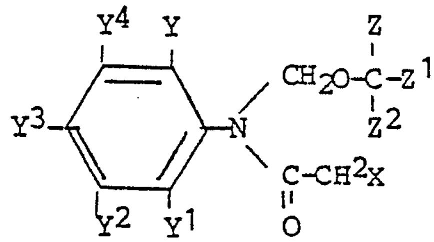

wherein
Y and $Y^1$ are hydrogen, alkyl or alkoxy each of a maximum of 10 carbon atoms, and $Y^2$, $Y^3$ and $Y^4$ are hydrogen, halogen or alkyl having a maximum of 10 carbon atoms;
Z, $Z^1$ and $Z^2$ are hydrogen, alkyl, hydroxyalkyl, haloalkyl, alkenyl, alkynyl, alkoxy or polyalkoxy each f from 1 to 18 carbon atoms, or hetero-cyclyl selected from the group consisting of furfuryl, thiofuranyl, pyrrolyl, thiazolyl, pyranyl, oxazinyl and triazinyl; and
X is chlorine, bromine or iodine; and

(c) a non-phytotoxic antidotally effective amount of a compound of the formula

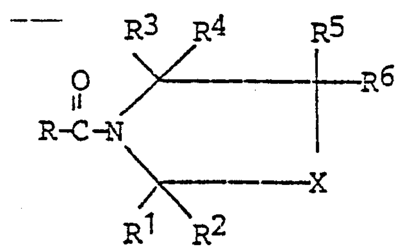

in which
X is oxygen or sulfur;
R is haloalkyl having 1 to 10 carbon atoms, inclusive, and the term halo includes chloro and bromo substitutions, alkyl having 1 to 4 carbon atoms, inclusive; and
$R^1$, $R^2$, $R^3$, $R^4$, $R^5$ and $R^6$ are independently selected from the group consisting of hydrogen, lower alkyl having 1 to 4 carbon atoms, inclusive, alkoxyalkyl having a total of 2 to 4 carbon atoms, inclusive, alkoxyalkyl having a total of 2 to 4 carbon atoms, inclusive, and lower alkylol having 1 to 4 carbon atoms, inclusive.

This invention also includes the method of establishing herbicidal selectivity which comprises applying

to the locus where selectivity is desired a composition comprising:

(a) an herbicidally effective amount of a pyrrolidone compound of the formula

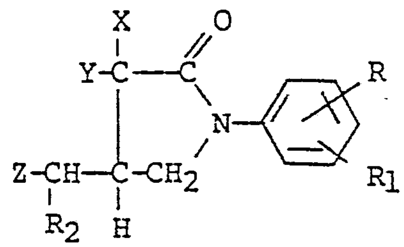

in which

X is hydrogen, chlorine, or methyl;

Y is hydrogen, chlorine or bromine;

Z is chlorine or bromine;

R is hydrogen, alkyl, acetyl, chlorine, bromine, fluorine, iodine, trifluoromethyl, nitro, cyano, alkoxy having 1 to 4 carbon atoms, inclusive, alkylthio having 1 to 4 carbon atoms, inclusive, alkylsulfinyl having 1 to 4 carbon atoms, inclusive, alkylsulfonyl having 1 to 4 carbon atoms, inclusive, trifluoromethylthio, trifluoromethylsulfinyl, trifluoromethylsulfonyl, pentafluoropropionamido, or 3-methylureido;

$R_1$ is hydrogen, alkyl having 1 to 4 carbon atoms, inclusive, chlorine or trifluoromethyl; and

$R_2$ is alkyl having 1 to 4 carbon atoms, inclusive, or hydrogen;

(b) an herbicidally effective amount of an alpha-haloacetanilide of the formula

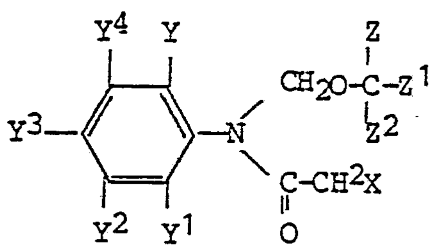

wherein

Y and $Y^1$ are hydrogen, alkyl or alkoxy each of a maximum of 10 carbon atoms, and $Y^2$, $Y^3$ and $Y^4$ are hydrogen, halogen or alkyl having a maximum of 10 carbon atoms;

Z, $Z^1$ and $Z^2$ are hydrogen, alkyl, hydroxyalkyl, haloalkyl, alkenyl, alkynyl, alkoxy or polyalkoxy each f from 1 to 18 carbon atoms, or hetero-cyclyl selected from the group consisting of furfuryl, thiofuranyl, pyrrolyl, thiazolyl, pyranyl, oxazinyl and triazinyl; and

X is chlorine, bromine or iodine; and

(c) a non-phytotoxic antidotally effective amount of a compound of the formula

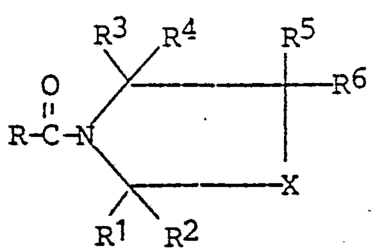

in which

X is oxygen or sulfur;

R is haloalkyl having 1 to 10 carbon atoms, inclusive, and the term halo includes chloro and bromo substitutions, alkyl having 1 to 4 carbon atoms, inclusive; and

$R^1$, $R^2$, $R^3$, $R^4$, $R^5$ and $R^6$ are independently selected from the group consisting of hydrogen, lower alkyl having 1 to 4 carbon atoms, inclusive, alkoxyalkyl having a total of 2 to 4 carbon atoms, inclusive,

alkoxyalkyl having a total of 2 to 4 carbon atoms, inclusive, and lower alkylol having 1 to 4 carbon atoms, inclusive.

The locus where selectivity is desired may include soil, seeds, seedlings, and vegetation.

The pyrrolidone compounds used in the compositions of the present invention can be prepared according to the procedures described in U.S. Patent No. 4,110,105.

The dichloroacetyl oxazolidine compounds used in this invention can be prepared according to the procedures described in U.S. Pat. Nos. 3,959,304 and 3,989,503.

The alpha-haloacetanilide compounds used in this invention can be prepared according to the procedures described in U.S. Pats. 3,442, 945 and 3,547,620.

The preferred compounds for use in the composition of this invention include 1-m-trifluoromethylphenyl-3-chloro-4-chloromethyl-2-pyrrolidone, 2-chloro-2',6'-diethyl-N-(methoxymethyl) acetanilide and 2,2,5-trimethyl-N-dichloroacetocxazolidine. These compounds are normally used in a ratio of approximately 1:2:1 to 1:4:1 by weight of the pyrrolidone:acetanilide:oxazolidine, respectively.

## EXAMPLE I

Flats used for growing crops and weed species in the greenhouse were filled with loamy sand soil. Stock solutions of herbicides and antidotes were prepared as described below:

A. H-100

308 mg/50 ml acetone; 2 ml = 2.0 lb/A ai PPI
617 mg/50 ml acetone; 2 ml = 4.0 lb/A ai PPI
925 mg/50 ml acetone; 2 ml = 6.0 lb/A ai PPI

B. H-200

96 mg/50 ml acetone; 2 ml = 0.25 lb/A ai PPI
193 mg/50 ml acetone; 2 ml = 0.5 lb/A ai PPI
385 mg/50 ml acetone; 2 ml = 1.0 lb/A ai PPI

C. A-100

23 mg/100 ml acetone; 2 ml = 0.125 lb/A ai PPI
23 mg/50 ml acetone; 2 ml -= 0.25 lb/A ai PPI
46 mg/50 ml acetone; 2 ml = 0.5 lb/A ai PPI
92 mg/50 ml acetone; 2 ml = 1.0 lb/A ai PPI

Legend

H-100 = 2-chloro-N-(ethoxymethyl)-6'-ethyl-o-acetotoluidide
H-200 = 1-m-trifluoromethylphenyl-3-chloro-4-chloromethyl-2-pyrrolidone
A-100 = 2,2,5-trimethyl-N-dichloroacetyl oxazolidine
a.i. = active ingredient
PPI = pre-plant incorporation

Flat Preparation and Seeding

A one and one-half inch layer of soil was removed from each greenhouse flat. The remaining soil surface was leveled and stamped with a furrow-marker. Corn XL55A, corn XL43A, watergrass, and mustard seed were placed into the furrows. A one-half inch layer of the previously removed soil was spread over the seed.

Soil Treatment (Soil Blending)

The remaining soil was placed into a five gallon rotary mixer. While the soil was mixing, appropriate quantities of the above stock solutions were tank-mixed in a syringe, and then admixed with the soil. After thorough mixing, the soil was returned to the flat, leveled and taped to assure good contact of the soil and seed.

Greenhouse Environment and Injury Rating

After seeding and treatment, flats were placed onto greenhouse benches where the temperature was maintained between 70-90°. The soil surface was watered by sprinkling to assure good plant growth. Ratings of crop and weed injury were recorded four weeks after treatment. Plant growth in treated flats was visually compared with that observed in untreated flats. An injury rating of 1 to 100 was assigned to each species in each flat. (A rating of 0 equals no injury; a rating of 100 equals complete control.

TABLE I

| lb/A H-100 | lb/A H-200 | lb/A A-100 | Cn XL-55a | Cn XL-43A | Watergrass | Mustard |
|---|---|---|---|---|---|---|
| 2 | - | - | 10 | 10 | 100 | 100 |
| 4 | - | - | 30 | 40 | 100 | 100 |
| 6 | - | - | 45 | 75 | 100 | 100 |
| - | 0.25 | - | 10 | 15 | 85 | 100 |
| - | 0.50 | - | 35 | 40 | 100 | 100 |
| - | 1.00 | - | 60 | 60 | 100 | 100 |
| 2 | 0.25 | - | 30 | 30 | 100 | 100 |
| 2 | 0.50 | - | 25 | 35 | 100 | 100 |
| 2 | 1.00 | - | 30 | 30 | 100 | 100 |
| 4 | 0.25 | - | 30 | 30 | 100 | 100 |
| 4 | 0.50 | - | 20 | 20 | 100 | 100 |
| 4 | 1.00 | - | 35 | 50 | 100 | 100 |
| 6 | 0.25 | - | 40 | 60 | 100 | 100 |
| 6 | 0.50 | - | 30 | 50 | 100 | 100 |
| 6 | 1.00 | - | 30 | 75 | 100 | 100 |
| 2 | 0.25 | 0.125 | 0 | 0 | 100 | 100 |
| 2 | 0.25 | 0.25 | 20 | 20 | 100 | 100 |
| 2 | 0.25 | 0.50 | 30 | 30 | 100 | 100 |
| 2 | 0.25 | 1.00 | 30 | 30 | 100 | 100 |
| 2 | 0.50 | 0.125 | 0 | 0 | 100 | 100 |
| 2 | 0.50 | 0.25 | 20 | 25 | 100 | 100 |
| 2 | 0.50 | 0.50 | 20 | 20 | 100 | 100 |
| 2 | 0.50 | 1.00 | 15 | 15 | 100 | 100 |
| 2 | 1.00 | 0.125 | 15 | 15 | 100 | 100 |
| 2 | 1.00 | 0.25 | 15 | 15 | 100 | 100 |
| 2 | 1.00 | 0.50 | 0 | 0 | 100 | 100 |
| 2 | 1.00 | 1.00 | 25 | 30 | 100 | 100 |
| 4 | 0.25 | 0.125 | 10 | 15 | 100 | 100 |
| 4 | 0.25 | 0.25 | 0 | 0 | 100 | 100 |
| 4 | 0.25 | 0.50 | 20 | 20 | 100 | 100 |
| 4 | 0.25 | 1.00 | 30 | 30 | 100 | 100 |
| 4 | 0.50 | 0.125 | 0 | 0 | 100 | 100 |
| 4 | 0.50 | 0.25 | 10 | 10 | 100 | 100 |
| 4 | 0.50 | 0.50 | 30 | 30 | 100 | 100 |
| 4 | 0.50 | 1.00 | 10 | 15 | 100 | 100 |
| 4 | 1.00 | 0.125 | 0 | 10 | 100 | 100 |
| 4 | 1.00 | 0.25 | 20 | 20 | 100 | 100 |
| 4 | 1.00 | 0.50 | 15 | 15 | 100 | 100 |
| 4 | 1.00 | 1.00 | 15 | 15 | 100 | 100 |

TABLE I

(continued)

| lb/A H-100 | lb/A H-200 | lb/A A-100 | Cn XL-55a | Cn XL-43A | Watergrass | Mustard |
|---|---|---|---|---|---|---|
| 6 | 0.25 | 0.125 | 0 | 0 | 100 | 100 |
| 6 | 0.25 | 0.25 | 0 | 0 | 100 | 100 |
| 6 | 0.25 | 0.50 | 10 | 10 | 100 | 100 |
| 6 | 0.25 | 1.00 | 15 | 15 | 100 | 100 |
| 6 | 0.50 | 0.125 | 0 | 0 | 100 | 100 |
| 6 | 0.50 | 0.25 | 10 | 10 | 100 | 100 |
| 6 | 0.50 | 0.50 | 20 | 20 | 100 | 100 |
| 6 | 0.50 | 1.00 | 10 | 10 | 100 | 100 |
| 6 | 1.00 | 0.125 | 0 | 0 | 100 | 100 |
| 6 | 1.00 | 0.25 | 20 | 20 | 100 | 100 |
| 6 | 1.00 | 0.50 | 20 | 20 | 100 | 100 |
| 6 | 1.00 | 1.00 | 20 | 20 | 100 | 100 |

EXAMPLE II

Another set of tests were completed using the compounds as set forth below. The test procedure differed from the previous tests in the following respects: a 1.5 inch layer was removed from each flat. The remaining soil was leveled an stamped with a furrow-marker. Crop and weed seed were placed into the furrows. The previously removed 1.5 inch soil layer was spread over the seed.

Appropriate quantities of the above solutions were admixed with a small glass bottle. This tank-mixed solution was then atomized over the soil surface of the previously seeded flats.

EXAMPLE III

Evaluation of A-200, A-300 and A-100 as Antidotes of H-200 Plus H-300, H-400 and H-500

Injury to Corn and Milo

Testing evaluated the activity of three antidotes in combination with H-200 plus an acetanilide herbicide. The antidotes were applied at 0.5, 1.0 and 2.0 lb/A pre-emergence surface tank-mixed with 0.5 and 1.0 lb/A acetanilide plus 0.5 lb/A H-200.

## Stock Solutions

H-300, H-400, H-500

47 mg/50 ml acetone; 2 ml = 0.5 lb/A

93 mg/50 ml acetone; 2 ml = 1.0 lb/A

A-200, A-300, A-100

28 mg/30 ml acetone; 2 ml - 0.5 lb/A PES

56 mg/30 ml acetone; 2 ml = 1.0 lb/A PES

111 mg/30 ml acetone; 2 ml = 2.0 lb/A PES

H-200

386 mg/100 ml acetone; 2 ml = 0.5 lb/A PES

Legend

H-300 = 2-t-butyl-6-methyl-N-methoxymethyl-$\alpha$-chloroacetanilide

H-400 = 2-t-butyl-6-methyl-N-n-propoxymethyl-$\alpha$-chloroacetanilide

H-500 = 2-t-butyl-6-methyl-N-ethoxymethyl-$\alpha$-chloroacetanilide

A-200 = 2,2-dichloro-N-ethyl-N-benzyl-acetamide

A-300 = 2,2-dimethyl-3-dichloroacetyl-5-phenyl oxazolidine

PES = pre-emergence surface application

TABLE II

| H-200 lb/A | Acetanilide lb/A | Antidote lb/A | % Injury XL43A | Mustard | Milo R-10 |
|---|---|---|---|---|---|
| - | - | - | 0 | 0 | 0 |
| - | H-300 0.5 | - | 80 | 0 | 100 |
| 0.5 | H-300 0.5 | - | 80 | 100 | 100 |
| 0.5 | H-300 0.5 | A-100 0.5 | 0 | 100 | 97 |
| 0.5 | H-300 0.5 | A-100 1.0 | 0 | 100 | 100 |
| 0.5 | H-300 0.5 | A-100 2.0 | 0 | 100 | 90 |
| 0.5 | H-300 0.5 | A-200 0.5 | 0 | 100 | 100 |
| 0.5 | H-300 0.5 | A-200 1.0 | 0 | 100 | 100 |
| 0.5 | H-300 0.5 | A-200 2.0 | 0 | 100 | 100 |
| 0.5 | H-300 0.5 | A-300 0.5 | 0 | 100 | 90 |
| 0.5 | H-300 0.5 | A-300 1.0 | 0 | 100 | 90 |
| 0.5 | H-300 0.5 | A-300 2.0 | 0 | 100 | 90 |
| - | H-300 1.0 | - | 100 | 35 | 100 |
| 0.5 | H-300 1.0 | - | 100 | 100 | 100 |
| 0.5 | H-300 1.0 | A-100 0.5 | 25 | 100 | 100 |
| 0.5 | H-300 1.0 | A-100 1.0 | 40 | 100 | 100 |
| 0.5 | H-300 1.00 | A-100 2.0 | 0 | 100 | 100 |
| 0.5 | H-300 1.0 | A-200 0.5 | 20 | 100 | 100 |
| 0.5 | H-300 1.0 | A-200 1.0 | 0 | 100 | 100 |
| 0.5 | H-300 1.0 | A-200 2.0 | 0 | 100 | 100 |
| 0.5 | H-300 1.0 | A-300 0.5 | 75 | 100 | 100 |
| 0.5 | H-300 1.0 | A-300 1.0 | 55 | 100 | 100 |
| 0.5 | H-300 1.0 | A-300 2.0 | 0 | 100 | 100 |
| - | - | - 0 | 0 | 0 | 0 |
| 0.5 | - | - | 60 | 100 | 75 |
| - | H-400 0.5 | - | 95 | 85 | 100 |
| 0.5 | H-400 0.5 | - | 60 | 100 | 100 |
| 0.5 | H-400 0.5 | A-100 0.5 | 0 | 100 | 100 |
| 0.5 | H-400 0.5 | A-100 1.0 | 0 | 100 | 100 |
| 0.5 | H-400 0.5 | A-100 2.0 | 0 | 100 | 100 |
| 0.5 | H-400 0.5 | A-200 0.5 | 0 | 100 | 100 |
| 0.5 | H-400 0.5 | A-200 1.0 | 0 | 100 | 100 |
| 0.5 | H-400 0.5 | A-200 2.0 | 0 | 100 | 100 |
| 0.5 | H-400 0.5 | A-300 0.5 | 10 | 100 | 100 |
| 0.5 | H-400 0.5 | A-300 1.0 | 0 | 100 | 100 |
| 0.5 | H-400 0.5 | A-300 2.0 | 0 | 100 | 100 |
| - | H-400 1.0 | - | 60 | 70 | 100 |
| 0.5 | H-400 1.0 | - | 90 | 100 | 100 |
| 0.5 | H-400 1.0 | A-100 0.5 | 0 | 100 | 100 |
| 0.5 | H-400 1.0 | A-100 1.0 | 0 | 100 | 100 |
| 0.5 | H-400 1.0 | A-100 2.0 | 0 | 100 | 100 |
| 0.5 | H-400 1.0 | A-200 0.5 | 30 | 100 | 100 |
| 0.5 | H-400 1.0 | A-200 1.0 | 0 | 100 | 100 |
| 0.5 | H-400 1.0 | A-200 2.0 | 0 | 100 | 100 |
| 0.5 | H-400 1.0 | A-300 0.5 | 35 | 100 | 100 |
| 0.5 | H-400 1.0 | A-300 1.0 | 10 | 100 | 100 |
| 0.5 | H-400 1.0 | A-300 2.0 | 0 | 100 | 100 |

TABLE II

(continued)

| H-200 lb/A | Acetanilide lb/A | | Antidote lb/A | | % Injury XL43A | Mustard | Milo R-10 |
|---|---|---|---|---|---|---|---|
| - | - | | - | | - | - | - |
| 0.5 | - | | - | | 55 | 100 | 75 |
| - | H-500 | 0.5 | - | | 90 | 80 | 100 |
| 0.5 | H-500 | 0.5 | - | | 90 | 100 | 100 |
| 0.5 | H-500 | 0.5 | A-100 | 0.5 | 0 | 100 | 100 |
| 0.5 | H-500 | 0.5 | A-100 | 1.0 | 0 | 100 | 100 |
| 0.5 | H-500 | 0.5 | A-100 | 2.0 | 0 | 100 | 100 |
| 0.5 | H-500 | 0.5 | A-200 | 0.5 | 45 | 100 | 100 |
| 0.5 | H-500 | 0.5 | A-200 | 1.0 | 0 | 100 | 100 |
| 0.5 | H-500 | 0.5 | A-200 | 2.0 | 0 | 100 | 100 |
| 0.5 | H-500 | 0.5 | A-300 | 0.5 | 0 | 100 | 100 |
| 0.5 | H-500 | 0.5 | A-300 | 1.0 | 0 | 100 | 100 |
| 0.5 | H-500 | 0.5 | A-300 | 2.0 | 0 | 100 | 100 |
| 0.5 | H-500 | 1.0 | - | | 90 | 70 | 100 |
| 0.5 | H-500 | 1.0 | - | | 95 | 100 | 100 |
| 0.5 | H-500 | 1.0 | A-100 | 0.5 | 0 | 100 | 100 |
| 0.5 | H-500 | 1.0 | A-100 | 1.0 | 0 | 100 | 100 |
| 0.5 | H-500 | 1.0 | A-100 | 2.0 | 0 | 100 | 100 |
| 0.5 | H-500 | 1.0 | A-200 | 0.5 | 60 | 100 | 100 |
| 0.5 | H-500 | 1.0 | A-200 | 1.0 | 0 | 100 | 100 |
| 0.5 | H-500 | 1.0 | A-200 | 2.0 | 0 | 100 | 100 |
| 0.5 | H-500 | 1.0 | A-300 | 0.5 | 55 | 100 | 100 |
| 0.5 | H-500 | 1.0 | A-300 | 1.0 | 20 | 100 | 100 |
| 0.5 | H-500 | 1.0 | A-300 | 2.0 | 15 | 100 | 100 |
| - | - | | - | | 0 | 0 | 0 |
| 0.5 | - | | - | | 60 | 100 | 75 |
| 0.5 | - | | A-100 | 0.5 | 30 | 100 | 35 |
| 0.5 | - | | A-100 | 1.0 | 40 | 100 | 40 |
| 0.5 | - | | A-100 | 2.0 | 30 | 100 | 60 |
| 0.5 | - | | A-200 | 0.5 | 30 | 100 | 75 |
| 0.5 | - | | A-200 | 1.0 | 15 | 100 | 75 |
| 0.5 | - | | A-200 | 2.0 | 10 | 100 | 70 |
| 0.5 | - | | A-300 | 0.5 | 50 | 100 | 70 |
| 0.5 | - | | A-300 | 1.0 | 20 | 100 | 40 |
| 0.5 | - | | A-300 | 2.0 | 15 | 100 | 25 |
| - | H-300 | 0.5 | - | | 70 | 0 | 100 |
| - | H-300 | 1.0 | - | | 90 | 25 | 100 |
| - | H-400 | 0.5 | - | | 60 | 70 | 90 |
| - | H-400 | 1.0 | - | | 85 | 80 | 95 |
| - | H-500 | 0.5 | - | | 90 | 90 | 100 |
| - | H-500 | 1.0 | - | | 98 | 90 | 100 |

EXAMPLE IV

Evaluation of A-300 as an Antidote of Lasso Plus H-200

Injury to Sorghum

Testing evaluated A-300 as an antidote of sorghum injurydue to treatment by a mixture of Lasso and H-200. A-300 was applied at 2.0, 1.0 and 0.5 lb/A pre-emergence surface tank-mixed with H-200 at 0.5 and 0.75 lb/A and Lasso at 1.0, 2.0 and 4.0 lb/A.

Stock Solutions

H-200

108 mg/50 ml acetone; 2 ml = 0.5 lb/A PES

313 mg/50 ml acetone; 2 ml = 0.75 lb/A PES

A-300

100 mg/25 ml acetone; 2 ml = 2.0 lb/A PES

50 mg/25 ml acetone; 2 ml = 1.0 lb/A PES

25 mg/25 ml acetone; 2 ml = 0.5 lb/A PES

LASSO = 2-chloro-2,'6'-diethyo-N-(methoxymethyl)acetanilide

PES = pre-emergence surface application

TABLE III

| Lasso lb/A | H-200 lb/A | A-300 lb/A | % Injury R-10 Milo | % Injury Mustard |
|---|---|---|---|---|
| 1.0 | - | - | 55 | 20 |
| 2.0 | - | - | 80 | 30 |
| 4.0 | - | - | 95 | 45 |
| - | - | - | 0 | 0 |
| 1.0 | - | 0.5 | 15 | 20 |
| 1.0 | - | 1.0 | 10 | 20 |
| 1.0 | - | 2.0 | 0 | 20 |
| 2.0 | - | 0.5 | 30 | 25 |
| 2.0 | - | 1.0 | 20 | 30 |
| 2.0 | - | 2.0 | 20 | 30 |
| 4.0 | - | 0.5 | 40 | 45 |
| 4.0 | - | 1.0 | 20 | 45 |
| 4.0 | - | 2.0 | 25 | 45 |
| - | 0.5 | - | 70 | 100 |
| - | 0.5 | 0.5 | 70 | 100 |
| - | 0.5 | 1.0 | 70 | 100 |
| - | 0.5 | 2.0 | 60 | 100 |
| - | 0.75 | - | 85 | 100 |
| - | 0.75 | 0.5 | 75 | 100 |
| - | 0.75 | 1.0 | 75 | 100 |
| - | 0.75 | 2.0 | 75 | 100 |
| - | - | - | 0 | 0 |
| 1.0 | 0.5 | - | 85 | 100 |
| 2.0 | 0.5 | - | 95 | 100 |
| 4.0 | 0.5 | - | 98 | 100 |
| 1.0 | 0.75 | - | 95 | 100 |
| 2.0 | 0.75 | - | 97 | 100 |
| 4.0 | 0.75 | - | 98 | 100 |
| 1.0 | 0.5 | 0.5 | 80 | 100 |
| 1.0 | 0.5 | 1.0 | 80 | 100 |
| 1.0 | 0.5 | 2.0 | 75 | 100 |
| 2.0 | 0.5 | 0.5 | 95 | 100 |
| 2.0 | 0.5 | 1.0 | 95 | 100 |
| 2.0 | 0.5 | 2.0 | 95 | 100 |
| 4.0 | 0.5 | 0.5 | 97 | 100 |
| 4.0 | 0.5 | 1.0 | 98 | 100 |
| 4.0 | 0.5 | 2.0 | 97 | 100 |
| - | - | - | 0 | 0 |

TABLE III

(continued)

| Lasso lb/A | H-200 lb/A | A-300 lb/A | % Injury R-10 Milo | % Injury Mustard |
|---|---|---|---|---|
| 1.0 | 0.75 | 0.5 | 95 | 100 |
| 1.0 | 0.75 | 1.0 | 97 | 100 |
| 1.0 | 0.75 | 2.0 | 97 | 100 |
| 2.0 | 0.75 | 0.5 | 98 | 100 |
| 2.0 | 0.75 | 1.0 | 98 | 100 |
| 2.0 | 0.75 | 2.0 | 98 | 100 |
| 4.0 | 0.75 | 0.5 | 99 | 100 |
| 4.0 | 0.75 | 1.0 | 100 | 100 |
| 4.0 | 0.75 | 2.0 | 99 | 100 |
| - | - | - | 0 | 0 |

## Formulations

A formulation is the incorporation of a formulant in a form which is directly usable on crops and weeds. As defined herein, a "formulant" is the material which is to be formulated. The formulant may be either an antidote compound alone or an herbicide and antidote composition. The purpose of the formulation is to apply the formulant to the locus where it is desired to establish herbicidal selectivity by a convenient method. The "locus" may include soil, seeds, seedlings and vegetation.

The formulations are commonly dusts, wettable powders, granules, solutions or emulsifiable concentrates.

Dusts are free-flowing powder compositions containing the formulant impregnated on a particulate carrier. The particle size of the carriers is usually in the approximate range of 30 to 50 microns. Examples of suitable carriers are talc, bentonite, diatomaceous earth, and pyrophyllite. The composition generally contains up to 50% of formulant. Anti-caking and anti-static agents may also be added. Dusts may be applied by spraying from boom and hand sprayers on airplanes.

Wettable powders are finely divided compositions comprising a particulate carrier impregnated with the formulant and additionally containing one or more surface active agents. The surface active agent promotes rapid dispersion of the powder in an aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omegasubstituted polyethylene glycols of relatively long chain length. A list of surface active agents suitable for use in agriculture formulations can be found in Wade Van Valkenburg, Pesticide Formulations (Marcel Dekker, Inc., N.Y., 1973) at pages 79-84.

Granules comprise the formulant impregnated on a particulate inert carrier having a particle size of about 1 to 2 millimeters (mm) in diameter. The granules can be made by spraying a solution of the formulant in a volatile solvent onto the granular carrier. Examples of suitable carriers for the preparation of granules include clay, vermiculite sawdust, and granular carbon.

Emulsifiable concentrates consist of an oil solution of the formulant plus an emulsifying agent. Prior to use the concentrate is diluted with water to form a suspended emulsion of oil droplets. The emulsifiers used are usually a mixture of anionic and nonionic surfactants. Other additives, such as suspending agents and thickeners, may included in the emulsifiable concentrate.

When the formulant is an antidote and herbicide composition, the proportion of antidote compound to herbicide compound generally ranges from approximately 0.001 to 30 parts by weight of the antidote compound per weight of the herbicide compound.

Formulations generally contain several additives in addition the formulant and carrier or agent. Among

these are inert ingredients, diluent carriers, organic solvents, water, oil and water, water in oil emulsions, carriers of dusts and granules, and surface active wetting, dispersing and emulsifying agents. Fertilizers, e.g., ammonium nitrate urea and superphosphate, may be included. Aids to rooting and growth, e.g., compost, manure, humus and sand, may also be included.

Alternatively, the antidote compounds and herbicide and antidote compositions of this invention can be applied to a crop by addition of the formulant to irrigation water supplied to the field to be treated. This method of application permits the penetration of the compositions into the soil as the water is absorbed.

As another alternative, the formulant can be applied to the soil in the form of a solution in a suitable solvent. Solvents frequently used in these formulations include kerosene, fuel oil, xylene, petroleum fractions with boiling ranges above xylene and aromatic petroleum fractions rich in methylated naphthalenes. Liquid solutions, like dusts, may be app ed by spraying from boom and hand sprayers on airplanes.

## Claims

1. A composition characterised in that it comprises:

(a) an herbicidally effective amount of a pyrrolidone compound corresponding to the following general formula:

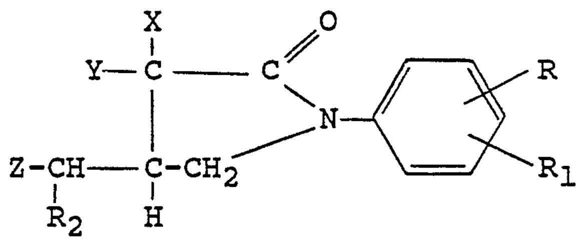

wherein
X represents hydrogen, chlorine or methyl;
Y represents hydrogen, chlorine or bromine
Z represents chlorine or bromine;
R represents hydrogen, alkyl, acetyl, chlorine, bromine, fluorine, iodine, trifluoromethyl, nitro, cyano, $C_1$-$C_4$ alkoxy, $C_1$-$C_4$ alkylthio, $C_1$-$C_4$ alkylsulfinyl, $C_1$-$C_4$ alkylsulfonyl, trifluoromethylthio, trifluoromethylsulfinyl, trifluoromethylsulfonyl, pentafluoropropionamido or 3-methylureido;
$R_1$ represents hydrogen, $C_1$-$C_4$ alkyl, chlorine or trifluoromethyl; and
$R_2$ represents $C_1$-$C_4$ alkyl or hydrogen;

(b) an herbicidally effective amount of an alpha-haloacetanilide corresponding to the following general formula:

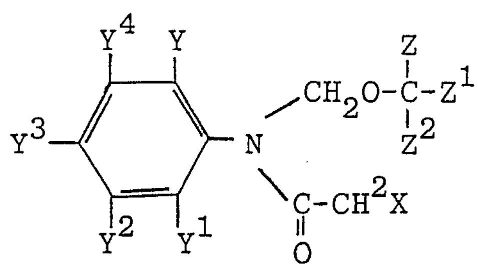

wherein
Y and $Y^1$ each represents hydrogen, $C_1$-$C_{10}$ alkyl or $C_1$-$C_{10}$ alkoxy;
$Y^2$, $Y^3$ and $Y^4$ each represents hydrogen, halogen or $C_1$-$C_{10}$ alkyl;
Z, $Z^1$ and $Z^2$ each represents hydrogen, $C_1$-$C_{18}$ alkyl, $C_1$-$C_{18}$ hydroxyalkyl, $C_1$-$C_{18}$ haloalkyl, $C_2$-$C_{18}$ alkenyl, $C_2$-$C_{18}$ alkynyl, $C_1$-$C_{18}$ (poly)alkoxy or heterocyclyl selected from furfuryl, thiofuranyl, pyrrolyl, thiazolyl, pyranyl, oxazinyl and triazinyl; and
X represents chlorine, bromine or iodine; and

(c) a non-phytotoxic antidotally effective amount of a compound corresponding to the following general formula:

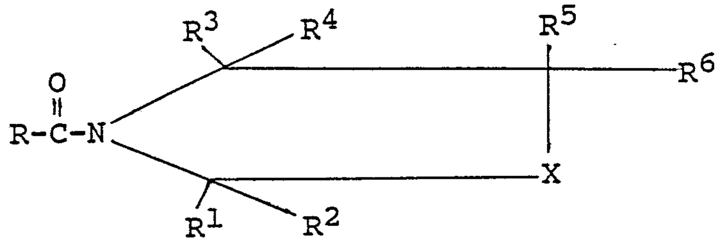

wherein

X represents oxygen or sulfur;

R represents cloro-or bromo-$C_1$-$C_{10}$ alkyl or $C_1$-$C_4$ alkyl; and

$R^1$, $R^2$, $R^3$, $R^4$, $R^5$ and $R^6$ each independently represents hydrogen, $C_1$-$C_4$ alkyl, $C_2$-$C_4$ alkoxyalkyl, and $C_1$-$C_4$ alkylol.

2. A composition as claimed in claim 1 wherein in (a) X represents hydrogen; Y represents chlorine; Z represents chlorine; R represents m-trifluoromethyl; $R_1$ represents hydrogen and $R_2$ represents hydrogen.

3. A composition as claimed in claim 1 or claim 2 wherein (a) is formulated as an emulsifiable concentrate.

4. A process for the production of a composition as defined in claim 1 characterised in that it comprises mixing the components.

5. A method of establishing or maintaining herbicidal selectivity characterised in that it comprises applying to the locus where selectivity is desired a composition as claimed in any of claims 1 to 3 or produced by a process as claimed in claim 4.